# EUROPEAN PATENT SPECIFICATION

(11) **EP 2 014 384 B1**
(45) Date of publication and mention of the grant of the patent: **21.03.2012**
(21) Application number: 08011080.2
(22) Date of filing: 18.06.2008
(51) Int. Cl.: B21D 26/02, B21D 53/78, B23P 15/04, F01D 5/16, B21D 47/00, F04D 29/66

(54) **Component with internal damping, precursor for forming such component and method for manufacturing the same**
Komponente mit Innendämpfung, Halbzeug zum Herstellen einer solchen Komponente sowie Verfahren zu ihrer Herstellung
Composant doté d'un amortisseur interne, demi-produit pour fabriquer un tel composant et procédé de fabrication dudit composant

(30) Priority: 13.07.2007 GB 0713700
(43) Date of publication of application: 14.01.2009
(73) Proprietor: Rolls-Royce plc, London SW1E 6AT (GB)
(72) Inventor: Strother, Oliver Michael, Clifton, Nottingham NG11 8FB (GB)
(74) Representative: Tindall, Adam

(56) References cited:
- EP-A- 0 926 312
- GB-A- 2 264 755
- US-A- 4 292 375
- US-A1- 2004 191 069

## Description

### FIELD OF THE INVENTION

The present invention relates to a component with internal damping according to the preamble of claim 15, a method of manufacturing such a component according to the preamble of claim 1, and a precursor assembly for forming such a component according to the preamble of claim 11. The invention is particularly, although not exclusively, concerned with components for use in gas turbine engines, for example fan blades.

### BACKGROUND OF THE INVENTION

In US 2004/0191069, a gas turbine blade is manufactured by a superplastic forming and diffusion bonding technique which results in a hollow blade, ie a blade having at least one internal cavity. A pair of panel precursors are laid in face-to-face contact with a membrane precursor. A predetermined pattern of stop-off material is applied to the panels. The precursors are diffusion bonded together, except where this is prevented by the stop-off material. Subsequently, internal pressure is created between the panels, causing the panels and membrane to deform superplastically to form a warren girder structure, with cavities in the regions where diffusion bonding was prevented by the stop-off material. US 4292375, which represent the closest prior art, discloses a similar gas turbine blade in which two internal membrane precursors are deformed into pyramid shapes.

The blade is subject to vibration induced by flutter and distortions in the gas flow over the blades. US 2004/0191069 A1 describes a method of damping such vibrations by coating the inner surface of the blade with a suitable damping material.

EP 0926312 discloses a metal fan blade having open cavities or pockets in one surface into which a filler material is disposed. A thin panel is bonded to the filler along the pocket to damp vibrations of the aerofoil.

In order to achieve damping, a degree of relative movement is required between the panels and the damping material. A problem with the arrangement of US 2004/0191069 A1 is that the warren girder structure is too stiff to permit a significant degree of such relative movement. Furthermore, the warren girder structure is relatively heavy.

### SUMMARY OF THE INVENTION

A first aspect of the invention provides a method of manufacturing a component, the method comprising: disposing a plurality of webs between a plurality of panels; and deforming the panels and the webs by applying internal pressure between the panels, thereby forming a series of internal cavities partitioned by the webs, characterised in that the method further comprises:
forming weakened regions in the webs which open to form holes in the webs during the deformation step; and
introducing a damping material into at least one of the cavities whereby it flows into the other cavities via the holes in the webs.

A second aspect of the invention provides a component comprising:
a plurality of panels; and
a plurality of webs extending between the panels and partitioning the component into a plurality of internal cavities,
characterised in that the component further comprises:
an array of holes formed in each web; and
a damping material substantially filling the internal cavities.

The component is preferably manufactured by the method of the first aspect of the invention.

The following comments apply to both the first and second aspects of the invention.

The webs may be comprise separate and distinct web members. However preferably the webs comprise spaced-apart web regions of a membrane precursor, and the membrane precursor is bonded between the web regions to an opposed pair of the panels.

Stop-off material may be applied to prevent or minimise bonding between the web regions of the membrane precursor and the opposed pair of panels. This material may be applied to the web regions and/or to the opposed pair of panels. Typically the stop-off material is applied in a striped pattern, the spaces between adjacent stripes on one side of the membrane precursor being disposed opposite a stripe on the other side of the membrane precursor, whereby the webs forms a warren girder structure within the component.

The component may be any component which is subject to vibration or impact when in use, for example a rotating blade such as a fan blade of a gas turbine engine, a stationary vane such as an outlet guide vane of a gas turbine engine, or a containment ring which surrounds a rotating component and is able to withstand impact in the event of catastrophic failure of the rotating component.

In a specific embodiment in accordance with the present invention, the component is a component for a gas turbine engine, for example a rotor blade such as a fan blade. Such a component is commonly manufactured principally from a metallic material, for example a titanium alloy.

Where the component is a rotating component, then the webs preferably extend in a radial direction so that they can carry radial load when in use, although in general the webs may extend in any direction.

The damping material may be any flowable material with suitable damping properties. In the context of this invention "damping material" means a material which dissipates strain energy, for example as heat, to a significant extent, by which is meant an extent greater than the energy dissipation of the principal material from which the component is formed. Preferably the damping material is a visco-elastic material. Typically the damping material is hardened after it has flowed into the cavities. For example the damping material may be a resin which is heated to cure the resin. Alternatively the material may be a thermoplastic material which is heated before being injected into the component, and hardens on cooling.

The damping material may be injected into more than one of the cavities. However, a problem with this is that more than one of the cavities must be weakened with an inlet port, and more than one injection system is required. Therefore more preferably the material is introduced into only one of the cavities, preferably via only one port, and flows from that cavity into all other cavities.

The weakened regions may be formed by cutting the webs, typically through the full thickness of the web, or machining them in any other way.

During the machining process, material may be removed from the webs to form open holes, or the webs may be machined without removing material (for instance by cutting slits in the web).

A third aspect of the invention provides a precursor assembly for forming a component, the assembly comprising: a plurality of panel precursors; and a membrane precursor disposed between the panel precursors, characterised in that the assembly further comprises a plurality of weakened regions formed in a plurality of spaced-apart web regions of the membrane precursor.

The precursor assembly is suitable for use in manufacturing a component by the method of the fist aspect of the invention.

### BRIEF DESCRIPTION OF THE DRAWINGS

Embodiments of the invention will now be described with reference to the accompanying drawings, in which:
Figure 1 is a sectional view taken through a fan blade of a gas turbine engine;
Figure 2 is an enlarged view of the region A in Figure 1;
Figure 3 is a schematic perspective view of a precursor assembly;
Figure 4 is a plan view of a web region of the flat membrane precursor according to a first example;
Figure 5 is a plan view of a web region of the flat membrane precursor according to a second example;
Figure 6 is a plan view of a web region of the flat membrane precursor according to a third example;
Figure 7 is a perspective view of part of the warren girder structure; and
Figure 8 shows six alternative hole shapes and configurations.

### DETAILED DESCRIPTION OF EMBODIMENT(S)

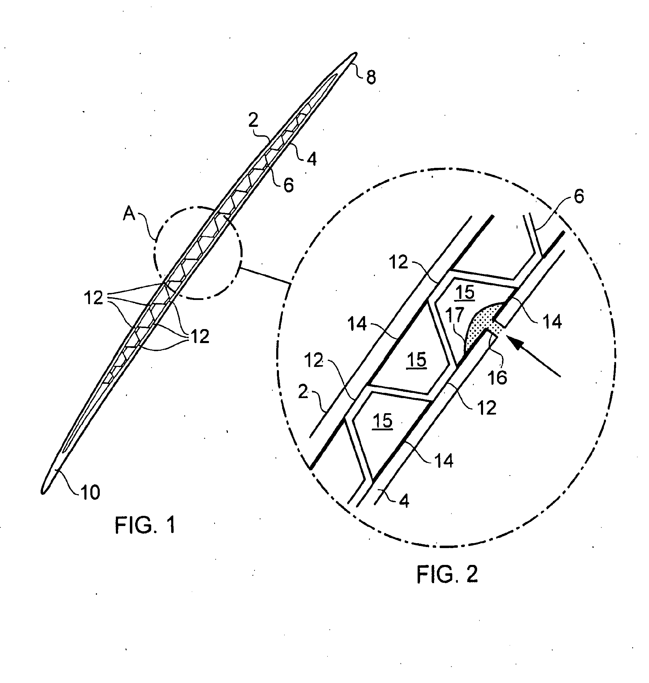

The fan blade shown in Figure 1 comprises outer panels 2,4 between which a warren girder structure 6 is disposed. The panels 2, 4 and the warren girder structure 6 are made from a titanium alloy. The panels 2 and 4 are diffusion bonded to each other at the leading and trailing edges 8, 10 of the blade, and to the warren girder structure 6 at contact regions 12, so that the warren girder structure 6 provides a plurality of partitions extending across the interior of the blade.

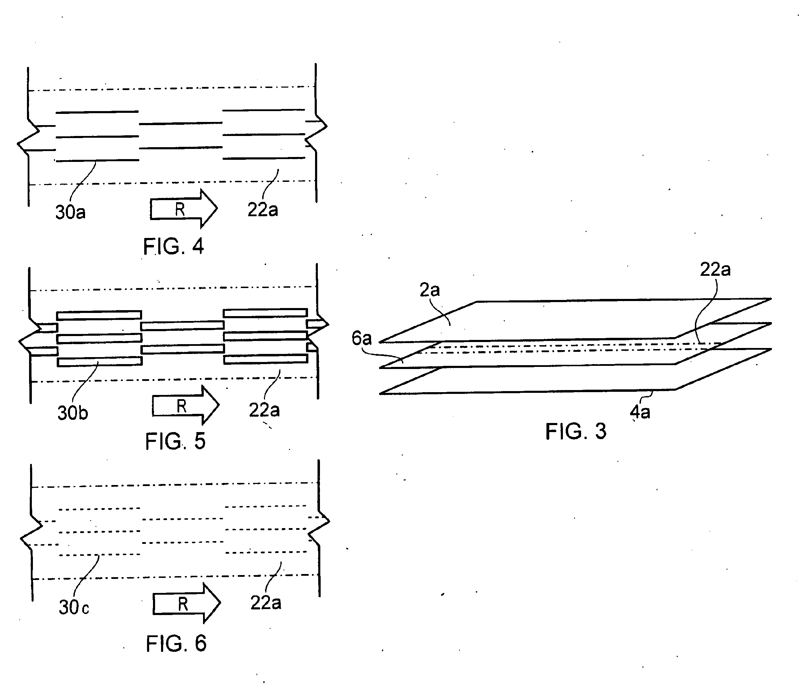

The blade shown in Figures 1 and 2 is formed from a precursor assembly shown in Figure 3. The precursor assembly comprises an opposed pair of panel precursors 2a, 4a (which eventually form the panels 2,4); and a membrane precursor 6a (which eventually forms the warren girder structure 6) disposed between the panel precursors. These precursors are initially flat.

A series of stripes 14 of stop-off material, for example yttria, are applied to the inner surface of the panel precursors, between the contact regions 12. The stop-off material may, for example be applied by a silk screen printing process.

It will be appreciated from Figure 2 that the stop-off stripes 14 on the panels 2 and 4 (and consequently on their precursors) are offset with respect to each other, so that the spaces between the stop-off stripes 14 on one of the panels are disposed opposite the stop-off stripes 14 on the other panel. The spacing between adjacent stripes14 is narrower than the stripes themselves, with the result that the oppositely facing stripes 14 slightly overlap one another.

The precursors are pressed together at high pressure and temperature so that diffusion bonds are created between contacting metal-to-metal regions corresponding to the contact regions 12 in Figure 2. The yttria stop-off material prevents full bonding between the stripes 14 and the membrane precursor 6a.

When bonding has been achieved, the bonded precursor assembly is heated to a temperature at which the assembly can be hot formed into a desired configuration in which, for example, the assembly has an arcuate cross-section with a twist between the ends of the assembly, approximating to a desired blade profile.

Subsequently, the bonded and hot formed precursor assembly is heated to a temperature at which superplastic deformation of the elements of the assembly can occur, and the assembly is internally pressurised by the introduction of high pressure inert gas, such as argon. An inlet port is provided in a wall of the precursor assembly and a delivery tube is welded onto the inlet port to define an inlet passage to the interior of the assembly. The delivery tube provides a sealed passage for the high pressure inert gas and prevents contamination of the inert gas with oxygen, thus preventing oxidation of the material of the precursor assembly. The high pressure gas forces the panels 2 and 4 apart from each other between their leading and trailing edges. Since the membrane precursor 6a is diffusion bonded at staggered intervals to the panels 2 and 4, but not bonded where the yttria stop-off material is present, the membrane will superplastically deform into the configuration shown in Figures 1 and 2. After super plastic deformation has taken place the pipe is removed and the inlet port is blocked up. In an alternative embodiment the inlet port can also be used for the delivery of a visco-elastic material 17, as described below.

Figures 4-6 are plan views of a web region 22a of the flat membrane precursor 6a according to three examples, with the web region 22a (that is, the part of the membrane that will eventually form the web 22) bounded by a pair of dash-dot lines and the radial direction being indicated by an arrow R. In each case the web region of the membrane is cut to form a series of weakened regions. Note that no weakened regions are formed outside the web region.

In the example of Figure 4 the weakened regions are closed slits 30a. In the example of Figure 5 the weakened regions are open holes 30b. In the example of Figure 6 the weakened regions are series of groups 30c of small slits. Note that the slits in Figures 4 and 6 are formed by cutting the membrane without the removal of any material, whereas the holes 30b in Figure 5 are formed by removing material.

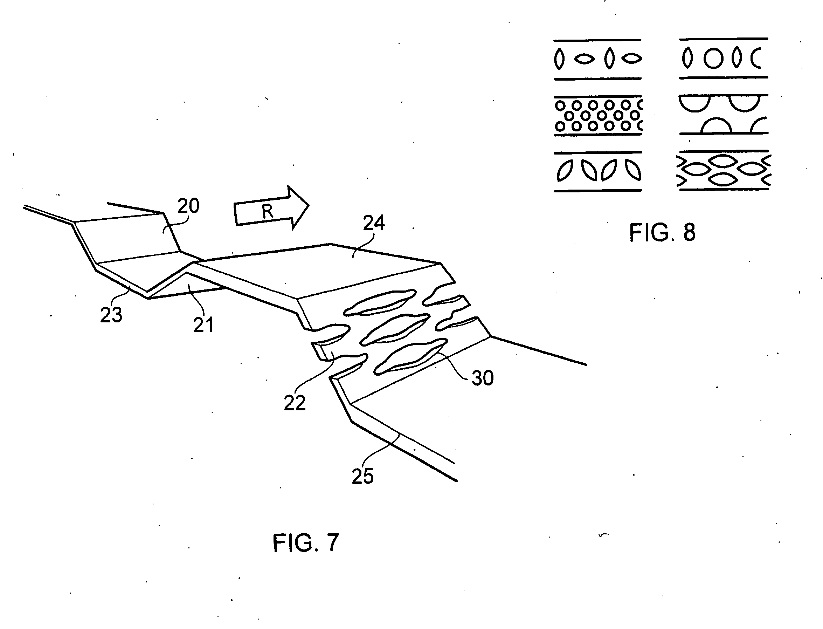

Figure 7 is a perspective view of the membrane 6 after the superplastic deformation step, with the radial direction being indicated by an arrow R. As shown in Figure 7, the membrane comprises a series of webs 20-22 which extend between the panels 2,4, and a series of feet 23-25 bonded to the panels 2,4 in the contact regions 12. The webs 20-22 and feet 23-25 extend radially along the full length of the blade, or over a patched area of the blade, thereby partitioning the hollow interior of the blade into a series of internal cavities 15. Note that for illustrative purposes only a small portion of the full radial length of the membrane is shown in Figure 7.

During the superplastic deformation step, the weakened regions open up to form a series of holes 30 as shown in Figure 7. Note that although no holes are shown in the webs 20,21, holes will be formed in these webs - either in the radial location shown in Figure 7 or at other radial locations along the length of the blade.

The weakened regions need to be constructed in such a way that the web does not tear during the subsequent forming steps. The holes in the webs may be regular or irregular shapes, and the weakened regions may be sized and shaped such that after the deformation process they open up to form a different and more beneficial shape (such as a flattened hexagon becoming a regular hexagon). A number of different arrangements and shapes of hole are possible, and six variants are shown in Figure 8.

After the superplastic deformation step, a liquid visco-elastic material 17 is injected into the hollow interior of the blade via a port 16 as shown in Figure 2. By way of non limiting example, a suitable visco-elastic material is a Huntsman^{™} single or two part syntactic foam. Alternatively a thermoplastic spray formed damper such as AIREX R63® as manufactured by Impag may be used. Note that the injection apparatus is omitted from the Figure s for purposes of clarity. However, positioning of the filler may be aided by a guide tube (not shown) inserted through the port 16. Additionally the position of the filler can be influenced by orientating the blade such that the filler will flow to a desired location in the blade under gravity.

Upon injection, the material first flows into the cavity 15 next to the port 16 as shown in Figure 2, then flows into the other cavities via the holes in the webs 20-22. At the end of the injection process, the hollow blade is substantially filled with liquid visco-elastic material, which subsequently hardens.

The internal surfaces of the blade cavity (ie the internal surfaces of the panels 2 and 4) may be cleaned by an acid etch technique prior to the injection of the filler material, thereby increasing the bond strength between the filler and the panel wall surfaces. The resulting structure is consequently that of a hollow component filled with visco-elastic damping material. The component therefore exhibits a reduction in the amplitude of vibration when subjected to excitation, for example by flow conditions around the blade. The reduced amplitude of vibration thus reduces the tendency of the blades to fail under high cycle fatigue conditions.

Furthermore, since the damping material is contained within the blade, it is not exposed to gas flow over the blade, nor to foreign objects striking the blade.

Furthermore, the outer surface finish of the blade is not influenced by the presence of damping material and so can be optimised to provide the desired aerodynamic characteristics of the blade.

The webs 20-22 are capable of carrying a radial load, hold the panels together to prevent panting of the blade or delamination of the panels during high centrifugal loads, and also bind the visco-elastic damping material in place.

The holes in the webs reduce the stiffness of the webs, enabling relative movement between the blade and the visco-elastic damping material. This enables the material to damp vibrations more efficiently, compared with an arrangement in which the webs have no holes. At the same time, the holes enable the damping material to flow between the internal cavities 15 and substantially fill the blade. Also, the holes reduce the total weight of the warren girder structure.

Although the invention has been described above with reference to one or more preferred embodiments, it will be appreciated that various changes or modifications may be made without departing from the scope of the invention as defined in the appended claims.

## Claims

1. A method of manufacturing a component, the method comprising: disposing a plurality of webs between a plurality of panels; and deforming the panels and the webs by applying internal pressure between the panels, thereby forming a series of internal cavities (15) partitioned by the webs (20-22), **characterised in that** the method further comprises:
forming weakened regions (30a,30b,30c) in the webs which open to form holes (30) in the webs (20-22) during the deformation step; and
introducing a damping material (17) into at least one of the cavities (15) whereby it flows into the other cavities via the holes in the webs.

2. The method of claim 1, wherein the webs comprise spaced-apart web regions (22a) of a membrane precursor (6a), and the method further comprises bonding the membrane precursor between the web regions to an opposed pair of the panels.

3. The method of claim 2, further comprising applying a stop-off material (14) to prevent or minimise bonding between the web regions of the membrane precursor and the opposed pair of panels.

4. The method of claim 3, wherein the stop-off material is applied to the opposed pair of panels.

5. The method of claim 3 or 4, wherein the stop-off material is applied in a striped pattern, the spaces between adjacent stripes on one side of the membrane precursor being disposed opposite a stripe on the other side of the membrane precursor, whereby the webs forms a warren girder structure within the component.

6. The method of any preceding claim further comprising hardening the damping material (17) after it has flowed into the cavities.

7. The method of any preceding claim wherein the damping material is introduced into only one of the cavities, and flows from that cavity into all other cavities.

8. The method of any preceding claim wherein the weakened regions are formed by cutting the webs.

9. The method of any preceding claim wherein the weakened regions are formed by removing material from the webs.

10. The method of any of claims 1 to 8 wherein the weakened regions are formed without removing material from the webs.

11. A precursor assembly for forming a component, the assembly comprising: a plurality of panel precursors (2a,4a); and a membrane precursor (6a) disposed between the panel precursors, **characterised in that** the assembly further comprises a plurality of weakened regions (30a,30b,30c) formed in a plurality of spaced-apart web regions (22a) of the membrane precursor.

12. The assembly of claim 11 wherein the membrane precursor is bonded between the web regions to an opposed pair of the panel precursors.

13. The assembly of claim 12, further comprising a stop-off material disposed between the web regions to prevent or minimise bonding between the membrane precursor and an opposed pair of the panels.

14. The assembly of claim 13, wherein the stop-off material is applied in a striped pattern, the spaces between adjacent stripes on one side of the membrane precursor being disposed opposite a stripe on the other side of the membrane precursor.

15. A component comprising:
a plurality of panels (2,4); and
a plurality of webs (20-24) extending between the panels and partitioning the component into a plurality of internal cavities (15),
**characterised in that** the component further comprises:
an array of holes (30) formed in each web (20-22); and
a damping material (17) substantially filling the internal cavities.

## Patentansprüche

1. Verfahren zum Herstellen eines Bauteils, wobei das Verfahren umfasst: Anordnen einer Mehrzahl von Stegen zwischen einer Mehrzahl von Platten und Verformen der Platten und der Stege durch Anwenden von innerem Druck zwischen den Platten, um **dadurch** eine Reihe von inneren Hohlräumen (15) zu formen, die durch die Stege (20-22) unterteilt sind, **dadurch gekennzeichnet, dass** das Verfahren weiter umfasst:
Bilden geschwächter Bereiche (30a, 30b, 30c) in den Stegen, die sich öffnen, um Löcher (30) in den Stegen (20-22) während des Verformungsschritts zu bilden, und
Einbringen eines Dämpfungsmaterials (17) in mindestens einen der Hohlräume (15), wodurch dieses über die Löcher in den Stegen in die anderen Hohlräume fließt.

2. Verfahren nach Anspruch 1, wobei die Stege beabstandete Stegbereiche (22a) einer Membranvorform (6a) aufweisen, und das Verfahren weiter das Verbinden der Membranvorform zwischen den Stegbereichen an einem gegenüberliegenden Paar der Platten umfasst.

3. Verfahren nach Anspruch 2, das weiter das Aufbringen eines Abdeckmaterials (14) zum Verhindern oder Minimieren der Verbindung zwischen den Stegbereichen der Membranvorform und dem gegenüberliegenden Paar von Platten umfasst.

4. Verfahren nach Anspruch 3, wobei das Abdeckmaterial auf das gegenüberliegende Paar von Platten aufgebracht wird.

5. Verfahren nach Anspruch 3 oder 4, wobei das Abdeckmaterial in einem Streifenmuster aufgebracht wird, wobei die Abstände zwischen benachbarten Streifen auf einer Seite der Membranvorform gegenüber eines Streifens auf der anderen Seite der Membranvorform angeordnet sind, wodurch die Stege innerhalb des Bauteils eine Fachwerkstruktur bilden.

6. Verfahren nach irgendeinem vorhergehenden Anspruch, das weiter das Härten des Dämpfungsmaterials (17) umfasst, nachdem es in die Hohlräume eingeflossen ist.

7. Verfahren nach irgendeinem vorhergehenden Anspruch, wobei das Dämpfungsmaterial in nur einen der Hohlräume eingeführt wird und von diesem Hohlraum in alle anderen Hohlräume strömt.

8. Verfahren nach irgendeinem vorhergehenden Anspruch, wobei die geschwächten Bereiche durch Schneiden der Stege gebildet werden.

9. Verfahren nach irgendeinem vorhergehenden Anspruch, wobei die geschwächten Bereiche durch Abtragen von Material von den Stegen gebildet werden.

10. Verfahren nach irgendeinem der Ansprüche 1 bis 8, wobei die geschwächten Bereiche ohne Abtragen von Material von den Stegen gebildet werden.

11. Vorformbaugruppe zur Bildung eines Bauteils, wobei die Baugruppe umfasst: eine Mehrzahl von Plattenvorformen (2a, 4a) und eine Membranvorform (6a), die zwischen den Plattenvorformen angeordnet ist, **dadurch gekennzeichnet, dass** die Baugruppe weiter eine Mehrzahl geschwächter Bereiche (30a, 30b, 30c) aufweist, die in einer Mehrzahl von beabstandeten Stegbereichen (22a) der Membranvorform gebildet sind.

12. Baugruppe nach Anspruch 11, wobei die Membranvorform zwischen den Stegbereichen mit einem gegenüberliegenden Paar der Plattenvorformen verbunden ist.

13. Baugruppe nach Anspruch 12 mit einem zwischen den Stegbereichen aufgebrachten Abdeckmaterial zum Verhindern oder Minimieren einer Bindung zwischen der Membranvorform und einem gegenüberliegenden Paar der Platten.

14. Baugruppe nach Anspruch 13, wobei das Abdeckmaterial in einem Streifenmuster aufgebracht ist, wobei die Abstände zwischen benachbarten Streifen auf einer Seite der Membranvorform gegenüber jeweils einem Streifen auf der anderen Seite der Membranvorform gelegen sind.

15. Bauteil mit:
einer Mehrzahl von Platten (2, 4), und
einer Mehrzahl von Stegen (20-24), die zwischen den Platten verlaufen und das Bauteil in eine Mehrzahl innerer Hohlräume (15) unterteilen,
**dadurch gekennzeichnet, dass** das Bauteil weiter aufweist:
eine Anordnung von Löchern (30), die in jedem Steg (20-22) gebildet sind, und
ein Dämpfungsmaterial (17), das die inneren Hohlräume im wesentlichen ausfüllt.

## Revendications

1. Procédé pour fabriquer un composant, le procédé comprenant les étapes consistant à : disposer une pluralité de bandes entre une pluralité de panneaux ; et déformer les panneaux et les bandes en appliquant une pression interne entre les panneaux, formant ainsi une série de cavités internes (15) séparées par les bandes (20-22), **caractérisé en ce que** le procédé comprend en outre les étapes consistant à :
former des régions affaiblies (30a, 30b, 30c) dans les bandes qui s'ouvrent afin de former des trous (30) dans les bandes (20-22) pendant l'étape de déformation ; et
introduire un matériau d'amortissement (17) dans au moins l'une des cavités (15), moyennant quoi il s'écoule dans les autres cavités via les trous dans les bandes.

2. Procédé selon la revendication 1, dans lequel les bandes comprennent des régions de bande espacées (22a) d'un précurseur de membrane (6a), et le procédé comprend en outre l'étape consistant à relier le précurseur de membrane entre les régions de bande à une paire opposée de panneaux.

3. Procédé selon la revendication 2, comprenant en outre l'étape consistant à appliquer un matériau d'arrêt (14) pour empêcher ou minimiser la liaison entre les régions de bande du précurseur de membrane et la paire opposée de panneaux.

4. Procédé selon la revendication 3, dans lequel le matériau d'arrêt est appliqué sur la paire opposée de panneaux.

5. Procédé selon la revendication 3 ou 4, dans lequel le matériau d'arrêt est appliqué selon un modèle à rayures, l'espace entre les rayures adjacentes sur un côté du précurseur de membrane étant disposé à l'opposé d'une rayure sur l'autre côté du précurseur de membrane, moyennant quoi les bandes forment une structure de poutre de Warren à l'intérieur du composant.

6. Procédé selon l'une quelconque des revendications précédentes, comprenant en outre l'étape consistant à faire durcir le matériau d'amortissement (17) après qu'il s'est écoulé dans les cavités.

7. Procédé selon l'une quelconque des revendications précédentes, dans lequel le matériau d'amortissement est introduit dans une seule des cavités, et s'écoule de cette cavité dans les autres cavités.

8. Procédé selon l'une quelconque des revendications précédentes, dans lequel les régions affaiblies sont formées en coupant les bandes.

9. Procédé selon l'une quelconque des revendications précédentes, dans lequel les régions affaiblies sont formées en retirant du matériau des bandes.

10. Procédé selon l'une quelconque des revendications 1 à 8, dans lequel les régions affaiblies sont formées sans retirer du matériau des bandes.

11. Ensemble de précurseur pour former un composant, l'ensemble comprenant : une pluralité de précurseurs de panneau (2a, 4a) ; et un précurseur de membrane (6a) disposé entre les précurseurs de panneau, **caractérisé en ce que** l'ensemble comprend en outre une pluralité de régions affaiblies (30a, 30b, 30c) formées dans une pluralité de régions de bande espacées (22a) du précurseur de membrane.

12. Ensemble selon la revendication 11, dans lequel le précurseur de membrane est relié entre les régions de bande à une paire opposée des précurseurs de panneau.

13. Ensemble selon la revendication 12, comprenant en outre un matériau d'arrêt disposé entre les régions de bande pour empêcher ou minimiser la liaison entre le précurseur de membrane et une paire opposée de panneaux.

14. Ensemble selon la revendication 13, dans lequel le matériau d'arrêt est appliqué selon un modèle à rayures, les espaces entre les rayures adjacentes d'un côté du précurseur de membrane étant disposés à l'opposé d'une rayure de l'autre côté du précurseur de membrane.

15. Composant comprenant :
une pluralité de panneaux (2, 4) ; et
une pluralité de bandes (20-24) s'étendant entre les panneaux et divisant le composant en une pluralité de cavités internes (15),
**caractérisé en ce que** le composant comprend en outre :
un réseau de trous (30) formés dans chaque bande (20-22) ; et
un matériau d'amortissement (17) remplissant sensiblement les cavités internes.
